(19) Europäisches Patentamt

European Patent Office

Office européen des brevets

(11) EP 0 753 402 A2

## (12) EUROPEAN PATENT APPLICATION

(43) Date of publication:
15.01.1997 Bulletin 1997/03

(51) Int Cl.⁶: **B32B 5/02**

(21) Application number: **96305184.2**

(22) Date of filing: **15.07.1996**

(84) Designated Contracting States:
**DE FR GB**

(30) Priority: **13.07.1995 JP 177723/95**
**20.07.1995 JP 184479/95**
**19.10.1995 JP 271435/95**

(71) Applicant: **Bridgestone Corporation**
**Tokyo (JP)**

(72) Inventors:
- **Ino, Fumitaka**
  **Tanashi-shi, Tokyo (JP)**
- **Kuwabara, Tadashi**
  **Yokosuka-shi, Kanagawa-ken (JP)**

(74) Representative: **Stoner, Gerard Patrick et al**
**MEWBURN ELLIS**
**York House**
**23 Kingsway**
**London WC2B 6HP (GB)**

### (54) Laminate form

(57) The invention provides a fibrous laminate form comprising a core layer of organic fiber nonwoven fabric and a skin layer of higher density organic fiber nonwoven fabric on one or both surfaces of the core layer. A laminate form comprising a core layer of organic fiber nonwoven fabric and an organic resin film on one or both surfaces of the core layer is also provided. Alternatively, a laminate form includes a core layer of organic fiber nonwoven fabric, an organic resin film on one surface of the core layer, and a skin layer of higher density organic fiber nonwoven fabric on the other surface of the core layer.

## Description

This invention relates to a laminate form suitable for use as automotive and building interior materials.

Automotive interior members including ceiling, door trims, rear bar shelves, trunk mats, and trunk lids are formed from various materials to various structures. For example, there are known and used interior members obtained by heat molding thermoplastic or thermosetting materials, interior members including a core in the form of a heat molded form of thermoplastic or thermosetting material and a skin adhesively attached to the core, and interior members of felt and inorganic fibers bonded with thermoplastic-or thermosetting resin.

Also interior members for use as automotive ceiling members are often prepared by using a core of solid or semi-isolid polyurethane foam, adhesively joining a glass mat to one or both surfaces of the core as a reinforcement, laying nonwoven fabric as a skin, and shaping in a mold.

The automotive interior members must be rigid enough to maintain their shape. One common approach for increasing rigidity is to blend a large proportion of glass fibers in resinous materials. The use of glass fibers, however, imposes a problem on the working environment and glass fiber-reinforced materials are difficult to recycle.

Therefore, an object of the present invention is to provide a novel and improved fibrous laminate form which is free of glass fibers and has advantages including high rigidity, ease of recycling or incineration, a soft and good looking appearance, and low cost.

Using organic fiber nonwoven fabric and optionally organic resin film, but not glass fibers, we attempted to produce laminate forms having advantages of high rigidity and a soft and good looking appearance and suitable for use as automotive and building interior members.

- In a first aspect, the present invention provides a fibrous laminate form comprising a core layer of organic fiber nonwoven fabric having opposed major surfaces and a skin layer of organic fiber nonwoven fabric on at least one major surface of the core layer and having a different density from the core layer.

In one preferred embodiment, the organic fiber nonwoven fabrics of the core layer and the skin layer comprise a major proportion of short fibers having a fineness of 1 to 60 deniers and at least 10% by weight of low-melting fibers as a binder. More preferably, the skin layer of nonwoven fabric has a multilayer structure including a surface layer containing 10 to 60% by weight of low-melting fibers and a fusing layer containing 60 to 100% by weight of low-melting fibers. The fusing layer is disposed close to the core layer. The core layer preferably has a density of at least 0.01 g/cm$^3$ and the skin layer preferably has a density of at least 0.1 g/cm$^3$, more preferably a higher density than the core layer. The core layer and the skin layer are stacked such that the fiber orientation of the core layer may be parallel or at an angle to the fiber orientation of the skin layer.

In a second aspect, the present invention provides a laminate form comprising a core layer of organic fiber nonwoven fabric having opposed major surfaces and an organic resin film on at least one major surface of the core layer. In one preferred embodiment, the organic fiber nonwoven fabric of the core layer comprises a major proportion of short fibers having a fineness of 1 to 60 deniers and at least 10% by weight of low-melting fibers as a binder. The core layer preferably has a density of at least 0.01 g/cm$^3$ and the organic resin film preferably has a thickness of at least 0.01mm.

In a third aspect, the present invention provides a laminate form comprising a core layer of organic fiber nonwoven fabric having opposed major surfaces, an organic resin film on one major surface of the core layer, and a skin layer of organic fiber nonwoven fabric on the organic resin film and having a higher density than the core layer. Preferably another organic resin film may be laminated on the other major surface of said core layer. Further, another skin layer of organic fiber nonwoven fabric having a higher density than said core layer may be laminated on the other major surface laminated-organic resin film.

In a fourth aspect, the present invention provides a laminate form comprising a core layer of organic fiber nonwoven fabric having opposed major surfaces, an organic resin film on one major surface of the core layer, and a skin layer of organic fiber nonwoven fabric on the other major surface of the core layer and having a higher density than the core layer. Preferably, another skin layer of organic fiber nonwoven fabric having a higher density than the core layer may be laminated on said organic resin film.

In a fifth aspect, the present invention provides a laminate form comprising a core layer of organic fiber nonwoven fabric having opposed major surfaces, a skin layer of organic fiber nonwoven fabric on one major surface of the core layer and having a higher density than said core layer, and an organic resin film on the skin layer. A decorative sheet may be laminated on the organic resin layer. In this embodiment, another organic resin film may be laminated on the other major surface of the core layer, and another skin layer of organic fiber nonwoven fabric having a higher density than the core layer is laminated on the other major surface laminated-organic resin film. Alternatively, another skin layer of organic fiber nonwoven fabric having a higher density than the core layer may be laminated on the other surface of the core layer.

In preferred embodiments of the third, fourth and fifth aspects, the organic fiber nonwoven fabrics of the core layer and the skin layer preferably comprise a major proportion of short fibers having a fineness of 1 to 60 deniers and at least 10% by weight of low-melting fibers as a binder. The skin layer of nonwoven fabric preferably has a multilayer structure including a surface layer containing 10 to 60% by weight of low-melting fibers and a fusing layer containing 60 to 100% by weight of low-melting fibers, the fusing layer being disposed close to the core layer. The core layer preferably has a density of at least 0.01 g/cm$^3$ and the skin layer preferably has a higher density of at least 0.1 g/cm$^3$. The core layer and the skin layer may be stacked such that the fiber orientation of the core layer may be parallel to the fiber orientation of the skin layer, Preferably, the core layer and the skin layer are stacked such that the fiber orientation of the core layer is at an angle to the fiber orientation of the skin layer.

In any embodiment having a structure of (1) a core layer of organic fiber nonwoven fabric and a skin layer of organic fiber nonwoven fabric, (2) a core layer of organic fiber nonwoven fabric and an organic resin film or (3) a core layer of organic fiber nonwoven fabric, an organic resin film, and a skin layer of organic fiber nonwoven fabric, the laminate form of the invention is lightweight and highly rigid although it is free of glass fibers. Since only organic fibers or organic fibers and organic resin film are contained, the laminate form is easy to recycle. In preferred embodiments wherein the organic fiber non-woven fabric contains short fibers and at least 10% by weight of a low-melting fiber binder, particularly in especially preferred embodiments wherein the skin layer is a laminate including a surface layer containing 10 to 60% by weight of low-melting fibers and a fusing layer containing 60 to 100% by weight of low-melting fibers, the core layer is firmly joined to the skin layer or organic resin film so that both the layers are integral enough to establish rigidity. In preferred embodiments wherein the skin layer has a higher density than the core layer, and particularly when the laminate form has a sandwich structure having the skin layer or organic resin film stacked on either surface of the core layer, the laminate form has higher rigidity even when it is relatively thin. A laminate form of higher rigidity is obtained when the core layer and the skin layer are stacked with their fiber orientation directions crossed at an angle.

The laminate form in preferred embodiments having an organic resin film is effective for reducing staining on use as a ceiling member because it is gas impermeable. More particularly, a ceiling member composed solely of nonwoven fabric can be stained or discolored at its surface because cigarette smoke flows upward to the ceiling member and passes through the nonwoven fabric which is gas permeable. Overlying a resin film on the nonwoven fabric as a skin or surface layer results in a laminate form which is gas impermeable and stain-proof on the surface and thus able to maintain a satisfactory outer appearance as an interior member.

These and further features of the present invention will be apparent with reference to the following description and drawings, wherein:

FIGS. 1 through 11 are schematic cross-sectional views of laminate forms according to first to eleventh embodiments of the invention.

FIGS. 12 through 18 are schematic perspective views of laminate forms according to twelfth to eighteenth embodiments of the invention.

FIG. 19 is a schematic cross-sectional view of a prior art laminate form.

FIG. 20 schematically illustrates the measurement of flexural strength of a test strip.

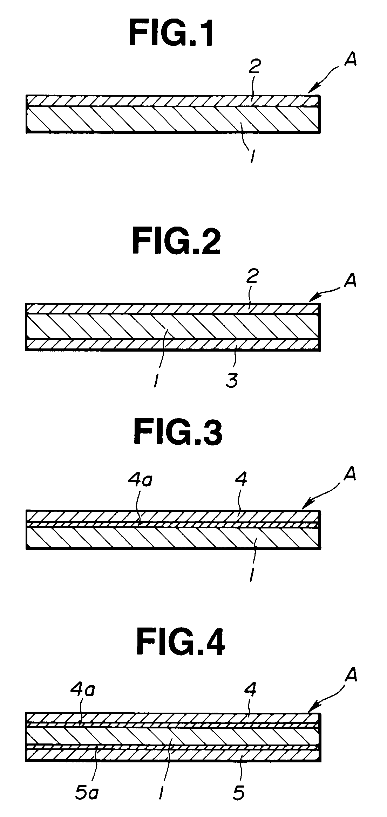

Referring to FIGS. 1 and 2, there is illustrated a fibrous laminate form according to the first aspect of the invention. The fibrous laminate form generally designated at A includes a core layer 1 of organic fiber nonwoven fabric having opposed major surfaces. A skin layer 2 of organic fiber nonwoven fabric is disposed on one major surface of the core layer 1 in the embodiment of FIG. 1. Two skin layers 2 and 3 of organic fiber nonwoven fabric are on the major surfaces of the core layer 1 in the embodiment of FIG. 2.

FIGS. 3 and 4 illustrate a laminate form according to the second aspect of the invention. The laminate form generally designated at A includes a core layer 1 of organic fiber nonwoven fabric having opposed major surfaces. An organic resin film 4 is disposed on one major surface of the core layer 1 in the embodiment of FIG. 3. Two organic resin films 4 and 5 are on the major surfaces of the core layer 1 in the embodiment of FIG. 4.

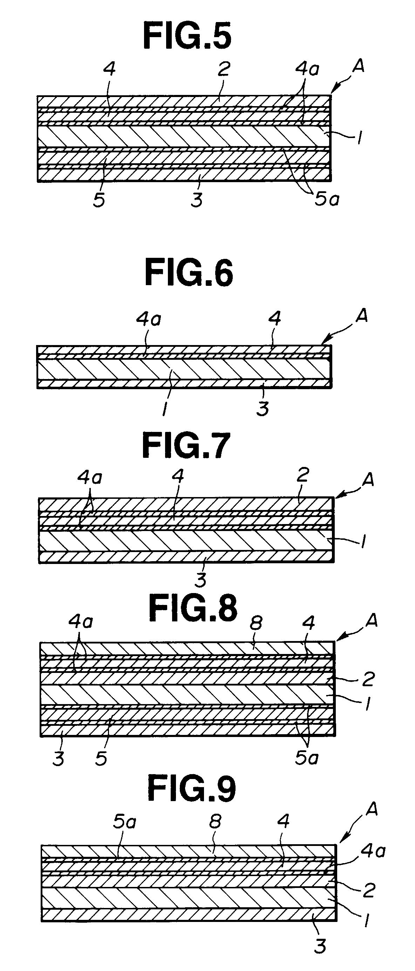

FIG. 5 illustrates a laminate form according to the third aspect of the invention. The laminate form generally designated at A includes a core layer 1 of organic fiber nonwoven fabric having opposed major surfaces. An organic resin film 4 is disposed on one major surface of the core layer 1 and a skin layer 2 of organic fiber nonwoven fabric is laminated on the organic resin film. In this case, if required, another organic resin film 5 may be disposed on the other major surface of the core layer 1, and another skin layer 3 of organic fiber nonwoven fabric may be laminated thereon, as shown in FIG. 5.

FIG. 6 illustrates a laminate form according to the fourth aspect of the invention. The laminate form generally designated at A includes a core layer 1 of organic fiber nonwoven fabric having opposed major surfaces. An organic resin film 4 is disposed on one major surface and a skin layer 2 of organic fiber nonwoven fabric is disposed on the other major surface of the core layer 1.

In this case, another skin layer 2 of organic fiber nonwoven fabric may be laminated on the organic resin film 4, as shown in FIG. 7.

FIGS. 8 and 9 illustrate a laminate form according to the fifth aspect of the invention. The laminate form generally designated at A includes a core layer 1 of organic fiber nonwoven fabric having opposed major surfaces. A skin layer 2 of organic fiber nonwoven fabric is disposed on one major surface of the core layer 1 and an organic resin film 4 is laminated thereon. In this case, as shown in FIG. 6, another organic resin film 5 may be disposed on the other major surface of the core layer 1, and, if required, another skin layer 3 of organic fiber nonwoven fabric may be laminated thereon. Alternatively, as shown in FIG. 7, another skin layer 3 may be disposed on the other major surface of the core layer 1.

As shown in FIGS. 8 and 9, a decorative sheet 8 may be laminated on the organic resin film 4. Such a decorative sheet may be laminated on the organic resin film 4 or 5 or the skin layer 2 or 3 in any embodiments described above.

If desired, as shown in FIGS. 3 to 9, resin layers having a low melting point such as hot-melt layers 4a and 5a are interleaved between the nonwoven fabric core layer 1 and the organic resin films 4 and 5 for improving adhesion. The low melting point resin layer preferably has a melting point of 80 to 160°C, especially 95 to 120°C.

The organic fiber nonwoven fabric used in each of the core layer 1 and skin layers 2, 3 is preferably made of polyester, polypropylene, acryl, nylon, vinylon, rayon, carbon and aramid fibers. In certain preferred embodiments, the organic fiber nonwoven fabric is composed mainly of short fibers having a fineness of 1 to 60 deniers, preferably 2 to 60 deniers, more preferably 2 to 30 deniers from the points of view of performance and cost. The base short fibers preferably have a melting point of at least 200°C, especially at least 250°C. Preferably the organic fiber nonwoven fabric is made of a mixture of the base short fibers with at least 10% by weight, more preferably 10 to 60% by weight, most preferably 30 to 55% by weight of low-melting fibers. The low-melting fibers are mixed as a binder for improving the adhesion between the core and skin layers of nonwoven fabric. By the term low-melting, it is meant that fibers have a melting point of 80 to 180°C, especially 90 to 170°C.

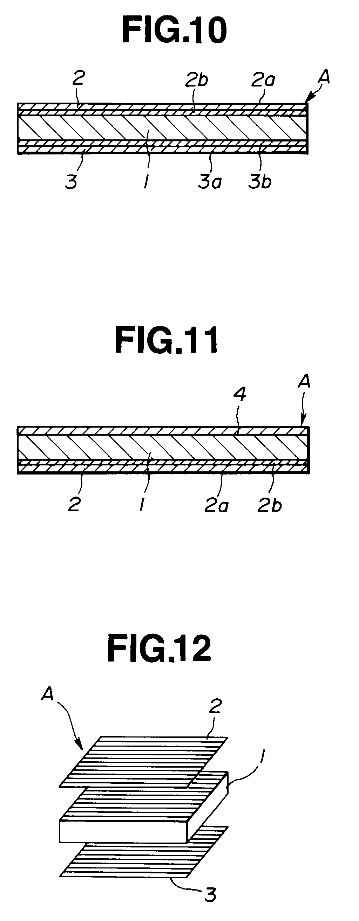

It is acceptable that the skin layers 2 and 3 have a multilayer structure of two or more layers as shown in FIGS. 10 and 11. More particularly, the skin layer 2 of nonwoven fabric may have a multilayer structure consisting of a surface layer 2a containing 10 to 60%, more preferably 20 to 55%, most preferably 30 to 55% by weight of the low-melting fibers and a fusing layer 2b containing 60 to 100%, more preferably 75 to 100%, most preferably 90 to 100% by weight of the low-melting fibers. In both the layers, the remainder is short fibers. The fusing layer 2b is disposed close to the nonwoven fabric core layer 1 and joined thereto. The same applies to the skin layer 3. This multilayered skin layer is recommended for adhesion and rigidity.

When the nonwoven fabric is formed of a blend of base fibers with at least 10% by weight of low-melting fibers as a binder as mentioned above, the core layer and skin layer both made therefrom can be joined together directly or through the resin layer having a low melting point such as the hot-melt layer simply by applying heat and pressure without a need for conventional adhesive. There can be formed a laminate consisting essentially of fibers, which is advantageous with respect to the working environment, recycling, and cost.

Preferably the nonwoven fabric core layer 1 has a density of at least 0.01 g/cm$^3$, more preferably 0.02 to 0.5 g/cm$^3$, most preferably 0.03 to 0.4 g/cm$^3$; and the nonwoven fabric skin layers 2, 3 have a density of at least 0.1 g/cm$^3$, more preferably 0.2 to 1.2 g/cm$^3$, most preferably 0.3 to 1.0 g/cm$^3$. The skin layers 2, 3 should preferably have a higher density than the core layer 1 because a laminate form with higher rigidity is expectable. It is noted that where the nonwoven fabric skin layers 2 and 3 are disposed on opposite surfaces of the nonwoven fabric core layer 1 as shown in FIG. 2, these skin layers 2 and 3 may have an identical or different density.

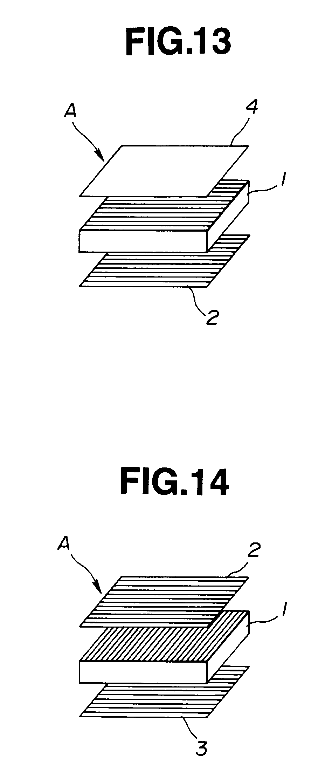

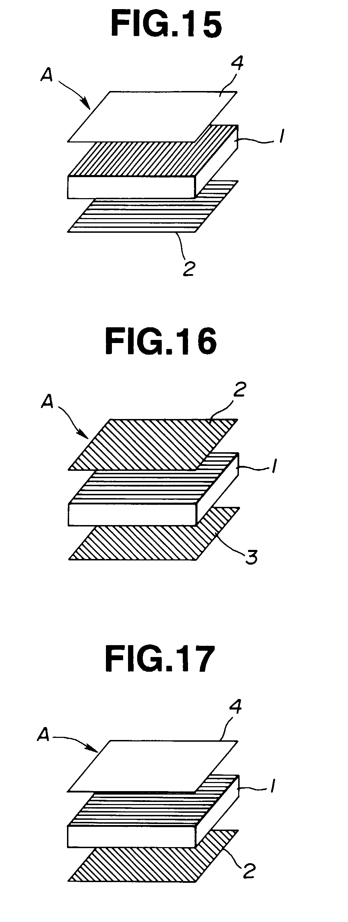

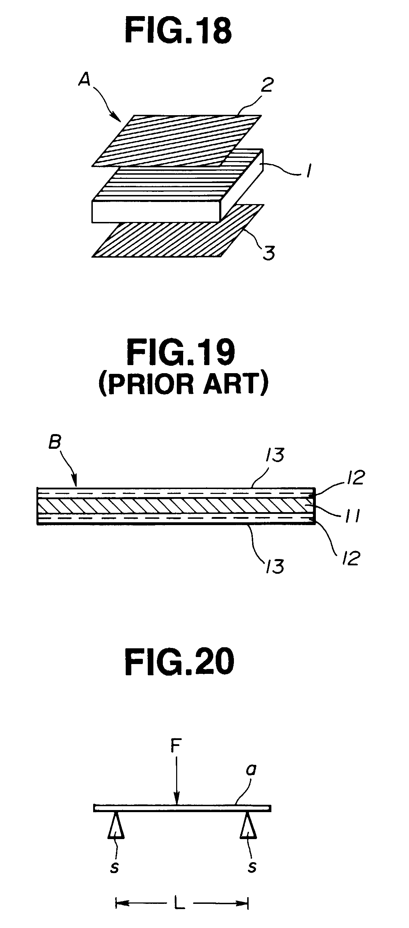

In the nonwoven fabric of the core and skin layers, fibers are often oriented in a certain direction. When the core and skin layers are laid one on the other, the fiber orientation of the skin layers 2 and 3 may be the same as the fiber orientation of the core layer 1 as shown in FIGS. 12 and 13. Preferably the fiber orientation of the skin layers 2 and 3 is different from the fiber orientation of the core layer 1 as shown in FIGS. 14 to 18 because the laminate form can be further increased in rigidity. The fiber direction of the skin layer is perpendicular to that of the core layer in FIGS. 14 and 15. The fiber directions of the skin and core layers cross at an angle of 45° in FIGS. 16 and 17 and at an angle of 22.5° in FIG. 18. Any angular crossing of fiber directions may be selected. In a sandwich structure wherein two non-woven fabric skin layers 2 and 3 lie on the opposite surfaces of the core layer 1 as shown in FIGS. 14, 16 and 18, the fiber directions of the two skin layers 2 and 3 may be parallel or perpendicular or at any angular crossing. In FIG. 18, for example, the fiber directions of the skin layers 2 and 3 cross the fiber direction of the core layer 1 at an angle of 22.5° and 67.5°, respectively. When it is desired to increase the flexural rigidity of such a sandwich structure laminate form in a certain direction, the fiber directions are chosen so as to increase the rigidity of the form in that direction.

The organic resin film used in the laminate form of the invention should preferably have a service temperature of at least 100°C, more preferably 100 to 200°C and an elongation of at least 100%, more preferably 100 to 200% when service conditions and shapability by drawing are taken into account. Exemplary resins used herein include polyester, polycarbonate and polypropylene. The use of a resin film as a surface cover on nonwoven fabric prohibits penetration of cigarette smoke, preventing the laminate form used as an interior member, typically an automotive ceiling member from being stained or discolored.

The resin film 4 is joined to the nonwoven fabric core layer 1 by placing an interleaf 4a of low-melting resin having a melting point of 90 to 135°C, especially 95 to 125°C, typically a polyethylene hot-melt interleaf between the resin film 4 and the core layer 1, and subjecting the structure to heat and pressure for causing the low-melting resin interleaf to melt, thereby integrally bonding the resin film 4 and the core layer 1. This process is advantageous with respect to bond strength, working environment, recycling, and cost while achieving an improvement in rigidity and physical strength.

The thickness of the respective layers is properly selected in accordance with a particular application. For example, it is preferred from the standpoints of performance and cost that the core layer has a thickness of about 3 to 100 mm, especially about 4 to 50 mm; the skin layer has a thickness of about 1/50 to about 1/3, especially about 1/40 to about 1/5 of the core layer thickness; and the organic resin film 4 has a thickness of at least about 0.01 mm, preferably about 0.02 mm or more, more preferably about 0.05 to 0.2 mm.

It is not critical how to prepare the laminate form of the invention. One preferred process is by laying a core layer-forming organic nonwoven fabric and a skin layer-forming organic nonwoven fabric and/or an organic resin film one on the other in a proper order, and hot pressing the resulting structure at a sufficient temperature to melt the low-melting fibers and at a sufficient pressure for a sufficient time to compress the core layer to a predetermined thickness, thereby bonding the core layer and the skin layer and/or the resin film into an integral structure. The temperature, pressure and time of the hot pressing step are as described above although a temperature of 150 to 190°C, a pressure of 0.1 to 5 kg/cm², and a time of 1 to 2 minutes are usually preferred.

It is understood that the laminate form of the invention may be provided with an appropriate finish for a place where it is applied. For example, a decorative sheet may be joined to one or both surfaces of the laminate form with the aid of a hot-melt film, adhesive or low-melting fibers to thereby impart an outer appearance of desired color or surface state.

EXAMPLE

Examples of the present invention are given below by way of illustration and not by way of limitation.

Examples 1-3

As the organic fiber nonwoven fabric for the support or core layer, three nonwoven fabrics were made by blending 60% by weight of 15-denier polyester fibers with 40% by weight of 4-denier low-melting polyester fibers, and opening, carding and needle punching. These fabrics had a thickness of 7 mm and a density of 0.036 g/cm³, 0.05 g/cm³, and 0.064 g/cm³. The fabrics were heat pressed at 180°C for one minute.

As the organic fiber nonwoven fabric for the skin layer, a nonwoven fabric was made by blending 60% by weight of 15-denier polyester fibers with 40% by weight of 4-denier low-melting polyester fibers, and opening, carding and needle punching. The fabric was heat pressed at 180°C for 30 seconds. The fabric had a thickness of 0.3 mm and a density of 0.5 g/cm³.

Combinations of the stock materials for the core layer and the skin layer are shown in Table 1.

The nonwoven fabrics were laid to form a sandwich structure of skin layer-forming nonwoven fabric/core layer-forming nonwoven fabric/skin layer-forming nonwoven fabric. The structure was heat pressed at 180°C for 1.5 minutes by means of a hot press, obtaining a laminate form as shown in FIG. 2. The nonwoven fabrics were arranged such that their fiber directions were parallel to each other.

The laminate forms thus obtained were examined by measuring the physical properties thereof and the parameters of the respective layers. The results are shown in Table 2.

Comparative Examples 1-2

A laminate form B as shown in FIG. 19 was prepared by using a rigid polyurethane foam sheet having a density of 0.028 g/cm³ and a thickness of 6 mm as the support or core layer, laying a glass mat with a basis weight of 230 g/m² or 300 g/m² and an adhesive with a basis weight of 65 g/m² on each surface of the polyurethane foam sheet, placing nonwoven fabrics having a basis weight of 30 g/m² as surface and back layers, and heat pressing the structure by means of a hot press. The laminate form had a thickness of 6 mm and a basis weight of 850 g/m² or 970 g/m². As shown in FIG. 19, the laminate form B apparently consisted of a polyurethane foam core layer 11, adhesive-impregnated glass mat layers 12, and nonwoven fabric layers 13.

The laminate forms thus obtained were examined by measuring the physical properties thereof and the parameters of the respective layers. The results are shown in Table 2.

Table 1

| Stock material | E1 | E2 | E3 | CE1 | CE2 |
|---|---|---|---|---|---|
| Core nonwoven fabric Density, g/cm³ Thickness, mm | 0.036 7 | 0.05 7 | 0.064 7 | (urethane foam) 0.028 6 | (urethane foam) 0.028 6 |

Table 1   (continued)

| Stock material | E1 | E2 | E3 | CE1 | CE2 |
|---|---|---|---|---|---|
| Skin nonwoven fabric<br>Density, g/cm$^3$<br>Thickness, mm | 0.5<br>0.3 | 0.5<br>0.3 | 0.5<br>0.3 | glass mat    230 g/m$^2$<br>adhesive    65 g/m$^2$<br>fabric    30 g/m$^2$ | glass mat    300 g/m$^2$<br>adhesive    65 g/m$^2$<br>fabric    30 g/m$^2$ |

Table 2

| Laminate form | E1 | E2 | E3 | CE1 | CE2 |
|---|---|---|---|---|---|
| Core nonwoven fabric<br>Density, g/cm$^3$<br>Thickness, mm | 0.083<br>3.4 | 0.117<br>3.4 | 0.15<br>3.4 | (urethane foam)<br>0.033<br>5 | (urethane foam)<br>0.033<br>5 |
| Skin nonwoven fabric<br>Density, g/cm$^3$<br>Thickness, mm | 0.5<br>0.3 | 0.5<br>0.3 | 0.5<br>0.3 | glass mat 230 g/m$^2$<br>adhesive 65 g/m$^2$<br>fabric 30 g/m$^2$ | glass mat 300 g/m$^2$<br>adhesive 65 g/m$^2$<br>fabric 30 g/m$^2$ |
| Form (skin/core/skin)<br>Thickness, mm<br>Basis weight, g/m$^2$<br>FS, kgf/cm$^2$ | 4<br>860<br>26 | 4<br>980<br>41.3 | 4<br>1090<br>55 | 6<br>850<br>13.4 | 6<br>970<br>15.0 |

Flexural strength was measured by a bending test according to JIS K 6911 by preparing a test strip having a width b of 50 mm and a length of 150 mm, supporting the strip a between fulcrums s and s with a span L of 100 mm, and placing a load F on the strip a at its center as shown in FIG. 20. Flexural strength (FS) is given by the following equation:

$$FS \ (kgf/cm^2) = 3WL/2bh^2$$

wherein W: maximum load (kgf) (N)

    L: span (cm)
    h: test strip thickness (cm)
    b: test strip width (cm).

Examples 4-5

As the organic fiber nonwoven fabric for the support or core layer, a nonwoven fabric was made by blending 60% by weight of 15-denier polyester fibers with 40% by weight of 4-denier low-melting polyester fibers, followed by opening, carding and needle punching. The fabric had a thickness of 7 mm and a basis weight of 350 g/m$^2$. The fabric was heat pressed at 180°C for one minute.

The skin layer used herein included a surface layer and a fusing layer. A nonwoven fabric was made by blending 60% by weight of 15-denier polyester fibers with 40% by weight of 4-denier low-melting polyester fibers, followed by opening, carding and needle punching. The fabric had a thickness of 1.5 mm and a basis weight of 110 g/m$^2$. This was used as the surface layer. Another nonwoven fabric was made from 100% by weight of 4-denier low-melting polyester fibers by opening, carding and needle punching. The fabric had a thickness of 1 mm and a basis weight of 40 g/m$^2$. This was used as the fusing layer. These two nonwoven fabrics were stacked and integrated by needle punching. The resulting skin layer was heat pressed at 180°C for 30 seconds to a density of 0.5 g/cm$^3$.

Combinations of the stock materials for the core layer and the skin layer are shown in Table 3.

A laminate form as shown in FIG. 6 was prepared by sandwiching the core layer between the skin layers such that the fusing layers of 100% 4-denier low-melting polyester fibers might face the core layer. The sandwich structure was heat pressed at 180°C for 1-1/2 minutes by means of a hot press with a spacer set so as to give a structure thickness of 4.3 mm. The resulting laminate form was taken out and allowed to cool down. The laminate form was subject to bending and peeling tests, with the results shown in Table 4.

A laminate form as shown in FIG. 2 was prepared using the skin layers which consisted solely of the surface layer having a thickness of 1.5 mm and a basis weight of 150 g/m$^2$ (that is, the fusing layer was omitted). This laminate form was also subject to bending and peeling tests, with the results shown in Table 4.

Note that the nonwoven fabrics were arranged such that their fiber directions were parallel to each other. The bending test was carried out to measure flexural strength (FS) by the same procedure as previously mentioned. The peeling test was carried out by pulling the skin layer and the core layer in opposite directions and measuring the bond strength.

Table 3

| Stock material | Example 4 | | Example 5 |
|---|---|---|---|
| Skin nonwoven fabric | | | |
| Thickness, mm | SL 0.2 | FL 0.08 | 0.28 |
| Density, g/cm$^3$ | SL 0.55 | FL 0.58 | 0.54 |
| Basis weight, g/cm$^2$ | 175 | | 175 |
| Core nonwoven fabric | | | |
| Thickness, mm | 7 | | 7 |
| Density, g/cm$^3$ | 0.05 | | 0.05 |
| Basis weight, g/cm$^2$ | 400 | | 400 |
| Note: SL: surface layer, FL: fusing layer | | | |

Table 4

| Laminate form | Example 4 | Example 5 |
|---|---|---|
| Fusing layer | present | absent |
| Thickness, mm | 4.3 | 4.3 |
| Basis weight, g/m$^2$ | 750 | 750 |
| FS, kgf/cm$^2$ | 29.9 | 24.1 |
| Peeling, kgf/inch | 0.69 | 0.55 |

As is evident from Table 4, the provision of the fusing layer is effective for enhancing the adhesion between the core layer and the skin layer and thus increasing flexural rigidity.

Examples 6-9

As the organic fiber nonwoven fabric for the support or core layer, two nonwoven fabrics were made by blending 60% by weight of 15-denier polyester fibers with 40% by weight of 4-denier low-melting polyester fibers, and opening, carding and needle punching. One fabric had a thickness of 6 mm and a density of 0.06 g/cm$^3$ and the other fabric had a thickness of 7 mm and a density of 0.05 g/cm$^3$.

As the organic fiber nonwoven fabric for the skin layer, two nonwoven fabrics were made by blending 60% by weight of 15-denier polyester fibers with 40% by weight of 4-denier low-melting polyester fibers, and opening, carding and needle punching. One fabric had a thickness of 0.5-0.8 mm and a density of 0.3-0.5 g/cm$^3$ and the other fabric had a thickness of 0.2-0.5 mm and a density of 0.3-0.75 g/cm$^3$.

Combinations of the stock materials for the core layer and the skin layer are shown in Table 5.

Using these stock materials, laminate forms as shown in FIGS. 12 and 14 were prepared. More particularly, using the stock materials combined as in Table 5, there were prepared a laminate form wherein the three layers: skin layer nonwoven fabric, core layer nonwoven fabric and skin layer nonwoven fabric had parallel fiber directions as shown in FIG. 12, and a laminate form wherein the fiber direction of the core layer was perpendicular to the fiber direction of the skin layers as shown in FIG. 14. After the nonwoven fabrics were laid in the selected orientation, the structure was heat pressed at 180°C for 1-1/2 minutes by means of a hot press.

The laminate forms thus obtained were examined by measuring the physical properties thereof and the parameters of the respective layers. The results are shown in Table 6.

It is noted that the results of Comparative Examples 1 and 2 are also shown in Tables 5 and 6 for ease of comparison.

Table 5

| Stock material | E6 | E7 | E8 | E9 | CE1 | CE2 |
|---|---|---|---|---|---|---|
| Core nonwoven fabric | | | | | (urethane foam) | (urethane foam) |
| Density, g/cm$^3$ | 0.06 | 0.06 | 0.05 | 0.05 | 0.028 | 0.028 |
| Thickness, mm | 6 | 6 | 7 | 7 | 6 | 6 |
| Skin nonwoven fabric | | | | | glass mat 230 g/m$^2$ | glass mat 300 g/m$^2$ |
| Density, g/cm$^3$ | 0.5 | 0.3 | 0.75 | 0.3 | adhesive 65 g/m$^2$ | adhesive 65 g/m$^2$ |
| Thickness, mm | 0.5 | 0.8 | 0.2 | 0.5 | fabric 30 g/m$^2$ | fabric 30 g/m$^2$ |

Table 6

| Laminate form | E6 | E7 | E8 | E9 | CE1 | CE2 |
|---|---|---|---|---|---|---|
| Core nonwoven fabric | | | | | (urethane foam) | (urethane foam) |
| Density, g/cm$^3$ | 0.11 | 0.13 | 0.09 | 0.11 | 0.033 | 0.033 |
| Thickness, mm | 3.3 | 2.7 | 3.9 | 3.3 | 5 | 5 |
| Skin nonwoven fabric | | | | | glass mat 230 g/m$^2$ | glass mat 300 g/m$^2$ |
| Density, g/cm$^3$ | 0.5 | 0.3 | 0.75 | 0.3 | adhesive 65 g/m$^2$ | adhesive 65 g/m$^2$ |
| Thickness, mm | 0.5 | 0.8 | 0.2 | 0.5 | fabric 30 g/m$^2$ | fabric 30 g/m$^2$ |
| Form (skin/core/skin) | | | | | | |
| Thickness, mm | 4.3 | 4.3 | 4.3 | 4.3 | 6 | 6 |
| Basis weight, g/cm$^2$ | 980 | 980 | 750 | 750 | 850 | 970 |
| FS, kgf/cm$^2$ | 27 | 46 | 20 | 33 | 13.4 | 15.0 |
| Fiber direction | // | ⊥ | // | ⊥ | | |
| //: parallel, ⊥: perpendicular | | | | | | |

It is evident from Table 6 that when laminate forms have an identical basis weight, the laminate form having perpendicular fiber directions between the core and the skin is more rigid than the laminate form having parallel fiber directions.

Examples 10-16

An organic fiber nonwoven fabric for the support or core layer was prepared by blending 60% by weight of 15-denier polyester fibers with 40% by weight of 4-denier low-melting polyester fibers, followed by opening, carding and needle punching. The fabric had a thickness of 7 mm and a basis weight of 350 g/m$^2$. The fabric was heat treated at 180°C for one minute.

An organic fiber nonwoven fabric for the skin layer was prepared by blending 60% by weight of 15-denier polyester fibers with 40% by weight of 4-denier low-melting polyester fibers, followed by opening, carding and needle punching. The fabric had a thickness of 1.5 mm and a basis weight of 150 g/m$^2$. The fabric was heat pressed at 180°C for 30 seconds by means of a hot press to a density of 0.5 g/cm$^3$.

Laminate forms as shown in FIGS. 12, 14, 16 and 18 were prepared by sandwiching the core layer between the skin layers. The sandwich structure was heat pressed at 180°C for 1-1/2 minutes by means of a hot press with a spacer set so as to give a structure thickness of 5.4 mm. The resulting laminate form was taken out and allowed to cool down. The laminate form was subject to a bending test.

In sandwiching the core layer between the skin layers, the layers were arranged while the carding direction of the skin layers was changed relative to the carding direction of the core layer. In this way, seven laminate forms were prepared. The results are shown in Table 7.

In Example 10, the carding direction of the core layer was coincident or parallel with the carding direction of the skin layers as shown in FIG. 12.

In Example 10, the carding direction of the skin layers was coincident or parallel with the carding direction of the core layer as shown in FIG. 12.

In Example 11, the carding direction of the skin layers was perpendicular (i.e., at an angle of 90°) to the carding direction of the core layer as shown in FIG. 14.

In Example 12, the carding direction of the skin layers was at an angle of 45° relative to the carding direction of the core layer as shown in FIG. 16.

In Example 13, the carding direction of one skin layer was at an angle of +45° relative to the carding direction of the core layer and the carding direction of the other skin layer was at an angle of -45° relative to the carding direction of the core layer. That is, the carding directions of the skin layers also crossed each other.

In Example 14, the carding direction of the skin layers was counterclockwise rotated 22.5° with respect to the carding direction of the core layer.

In Example 15, the carding direction of the skin layers was counterclockwise rotated 67.5° with respect to the carding direction of the core layer.

In Example 16, the carding direction of one skin layer was counterclockwise rotated 22.5° and the carding direction of the other skin layer was counterclockwise rotated 67.5° with respect to the carding direction of the core layer as shown in FIG. 18.

Table 7:

| Laminate form | | | | | | | |
|---|---|---|---|---|---|---|---|
| | E10 | E11 | E12 | E13 | E14 | E15 | E16 |
| Flexural strength (kgf/5 cm) | | | | | | | |
| Measuring direction* | parallel | 90° | 45° | 45°/cross | 22.5° | 67.5° | 22.5°/67.5° |
| Parallel | 8.80 | 11.34 | 9.13 | 8.47 | 11.11 | 9.33 | 12.30 |
| Perpendicular | 9.32 | 9.95 | 12.72 | 9.51 | 11.04 | 9.52 | 10.66 |
| 45° | 7.58 | 11.02 | 9.14 | 10.30 | 10.95 | 9.49 | 11.09 |
| 135° | 7.94 | 10.94 | 12.55 | 10.96 | 11.09 | 10.37 | 8.90 |
| Thickness, mm | 5.4 | 5.4 | 5.4 | 5.4 | 5.4 | 5.4 | 5.4 |
| Basis weight, g/m$^2$ | 750 | 750 | 750 | 750 | 750 | 750 | 750 |

* Measuring direction relative to the carding direction of the core layer

It is seen from Table 7 that the flexural rigidity in a selected direction of a sandwich structure laminate form can be increased by arranging the respective layers such that the carding directions extend at an angle although the stock materials are unchanged.

Examples 17-25

An organic fiber nonwoven fabric for the support or core layer was prepared by blending 60% by weight of 15-denier polyester fibers with 40% by weight of 4-denier low-melting polyester fibers, and opening, carding and needle punching. The fabric had a thickness of 7 mm and a density of 0.05 g/cm$^3$. The fabric was heat pressed at 180°C for one minute.

As one face layer (organic resin film), there were furnished polyester films having a density of 1.40 g/cm$^3$ and a thickness of 50 μm, 100 μm, 125 μm, and 188 μm. A hot-melt polyethylene film of 25 μm thick was also used for bonding the polyester film to the core layer.

As another face layer (skin layer), an organic fiber nonwoven fabric was prepared by blending 60% by weight of 15-denier polyester fibers with 40% by weight of 4-denier low-melting polyester fibers, and opening, carding and needle punching. The fabric had a thickness of 0.3 to 0.5 mm and a density of 0.5 to 0.9 g/cm$^3$.

A multilayer structure of polyester film/hot-melt film/core layer-forming nonwoven fabric/hot-melt film/polyester film was heat pressed at 180°C for 1.5 minutes by means of a compression press, obtaining a laminate form as shown in FIG. 4.

Combinations of the stock materials for the core layer, skin layer and resin film are shown in Table 8.

The laminate forms thus obtained were examined by measuring the physical properties thereof and the parameters of the respective layers. The results are shown in Table 9.

It is noted that the results of Comparative Examples 1 and 2 are also shown in Tables 8 and 9 for ease of comparison.

Table 8

| Stock material | E17 | E18 | E19 | E20 | CE1 | CE2 |
|---|---|---|---|---|---|---|
| Core nonwoven fabric<br>Density, g/cm$^3$<br>Thickness, mm | <br>0.05<br>7 | <br>0.05<br>7 | <br>0.05<br>7 | <br>0.05<br>7 | (urethane foam)<br>0.028<br>6 | (urethane foam)<br>0.028<br>6 |
| Face PET film<br>Density, g/cm$^3$<br>Thickness, $\mu$m | <br>1.40<br>50 | <br>1.40<br>100 | <br>1.40<br>125 | <br>1.40<br>188 | glass mat 230 g/m$^2$<br>adhesive    65 g/m$^2$<br>fabric    30 g/m$^2$ | glass mat 300 g/m$^2$<br>adhesive    65 g/m$^2$<br>fabric    30 g/m$^2$ |

Table 9

| Laminate form | E17 | E18 | E19 | E20 | CE1 | CE2 |
|---|---|---|---|---|---|---|
| Core nonwoven fabric<br>Density, g/cm$^3$<br>Thickness, mm | <br>0.090<br>3.9 | <br>0.092<br>3.8 | <br>0.093<br>3.75 | <br>0.097<br>3.62 | (urethane foam)<br>0.033<br>5 | (urethane foam)<br>0.033<br>5 |
| Face PET film<br>Density, g/cm$^3$<br>Thickness, mm | <br>1.40<br>50 | <br>1.40<br>100 | <br>1.40<br>125 | <br>1.40<br>188 | glass mat 230 g/m$^2$<br>adhesive    65 g/m$^2$<br>fabric    30 g/m$^2$ | glass mat 300 g/m$^2$<br>adhesive 65    g/m$^2$<br>fabric    30 g/m$^2$ |
| Form (face/core/face)<br>Thickness, mm<br>Basis weight, g/m$^2$<br>FS, kgf/cm$^2$ | <br>4<br>590<br>22.8 | <br>4<br>700<br>25.5 | <br>4<br>800<br>28.5 | <br>4<br>970<br>43.9 | <br>6<br>850<br>13.4 | <br>6<br>970<br>15.0 |

Also, a multilayer structure of polyester film/hot-melt film/core layer-forming nonwoven fabric/skin layer-forming nonwoven fabric was similarly heat pressed, obtaining a laminate form as shown in FIG. 6.

Combinations of the stock materials for the core layer, skin layer and resin film are shown in Table 10.

The laminate forms thus obtained were examined by measuring the physical properties thereof and the parameters of the respective layers. The results are shown in Table 11.

It is noted in Tables 10 and 11 that "PET" designates a polyethylene terephthalate film and "fabric" is a nonwoven fabric both as defined above. The PET film of 50 $\mu$m thick was used in combination with a hot-melt film including a polyethylene (PE) film of 25 $\mu$m thick and an ethylene-ethyl acrylate copolymer (EEA) film of 25 $\mu$m thick. The total thickness of PET film plus hot-melt film was 100 $\mu$m.

Table 10

| Stock material | E21 | E22 | E23 | E24 | E25 |
|---|---|---|---|---|---|
| Face layer<br>Density, f/cm$^3$<br>Thickness | PET<br>1.40<br>50 $\mu$m | fabric<br>0.5<br>0.3 mm | fabric<br>0.5<br>0.3 mm | PET<br>1.40<br>50 $\mu$m | PET<br>1.40<br>50 $\mu$m |
| Core layer<br>Density, g/cm$^3$<br>Thickness, mm | fabric<br>0.05<br>7 | fabric<br>0.05<br>7 | fabric<br>0.05<br>7 | fabric<br>0.05<br>7 | fabric<br>0.05<br>7 |
| Face layer<br>Density, g/cm$^3$<br>Thickness | PET<br>1.40<br>50 $\mu$m | PET<br>1.40<br>50 $\mu$m | PET<br>1.40<br>50 $\mu$m | fabric<br>0.5<br>0.3 mm | fabric<br>0.5<br>0.3 mm |

Table 11

| Laminate form | E21 | E22 | E23 | E24 | E25 |
|---|---|---|---|---|---|
| Fiber direction of core layer and face layer | - | parallel | 90°C | parallel | 90°C |
| Face layer<br>  Density, g/cm$^3$<br>  Thickness | PET<br>1.40<br>50 µm | fabric<br>0.5<br>0.3 mm | fabric<br>0.5<br>0.3 mm | PET<br>1.40<br>50 µm | PET<br>1.40<br>50 µm |
| Core layer<br>  Density, g/cm$^3$<br>  Thickness, mm | fabric<br>0.073<br>4.8 | fabric<br>0.076<br>4.6 | fabric<br>0.076<br>4.6 | fabric<br>0.076<br>4.6 | fabric<br>0.05<br>7 |
| Face layer<br>  Density, g/cm$^3$<br>  Thickness | PET<br>1.40<br>50 µm | PET<br>1.40<br>50 µm | PET<br>1.40<br>50 µm | fabric<br>0.5<br>0.3 mm | fabric<br>0.5<br>0.3 mm |
| Laminate form<br>  Thickness, mm<br>  Basis weight, g/m$^2$<br>  FS, kgf/cm$^2$ | 5<br>630<br>12.1 | 5<br>690<br>15.9 | 5<br>690<br>17.9 | 5<br>690<br>10.7 | 5<br>630<br>10.4 |

Examples 26-32

By using the materials shown in Table 12, laminate forms shown below were prepared. In Examples, the carding direction of the core layer and the skin layer was perpendicular. The laminate forms thus obtained were examined by measuring the physical properties thereof and the parameters of the respective layers. The results are shown in Table 13.

Table 12

| | E26 | E27 | E28 | E29 | E30 | E31 | E32 |
|---|---|---|---|---|---|---|---|
| Decorative nonwoven fabric sheet<br>Thickness, mm<br>Basis weight, g/m$^2$ | <br><br>2.0<br>180 | <br><br>-<br>- | <br><br>-<br>- | <br><br>-<br>- | <br><br>2.0<br>180 | <br><br>-<br>- | <br><br>-<br>- |
| Organic resin film<br>Thickness, mm | ZA31<br>60 | ZA31<br>60 | ZA31<br>60 | ZA31<br>60 | ZA31<br>60 | -<br>- | -<br>- |
| Skin nonwoven fabric layer<br>Density, g/cm$^3$<br>Thickness, mm | <br><br>0.4<br>0.2 | <br><br>0.4<br>0.3 | <br><br>0.4<br>0.4 | <br><br>0.4<br>0.4 | <br><br>0.4<br>0.4 | <br><br>0.4<br>0.3 | <br><br>0.4<br>0.3 |
| Fusing nonwoven fabric layer | | | | | | | |

Table 12   (continued)

|  | E26 | E27 | E28 | E29 | E30 | E31 | E32 |
|---|---|---|---|---|---|---|---|
| Density, g/cm$^3$ | 0.05 | 0.05 | - | - | 0.05 | - | 0.05 |
| Thickness, mm | 1.0 | 1.0 | - | - | 1.0 | - | 1.0 |
| Core nonwoven fabric layer Density, g/cm$^3$ | 0.07 | 0.07 | 0.07 | 0.03 | 0.03 | 0.07 | 0.07 |
| Thickness, mm | 6.5 | 7 | 7 | 19 | 19 | 7 | 7 |

Note:
The decorative nonwoven fabric sheet was prepared by using 3-denier polyester fibers, and opening, carding and needle punching.
The organic resin film was ZA31 manufactured by Daisel Chemical K.K. which is a composite film of a modified polyolefin resin layer and hot melt nylon layers laminated on both the surfaces of the modified polyolefin resin layer.
The fusing nonwoven fabric layer was prepared by using 100% 4-denier low-melting polyester fibers, and opening, carding and needle punching.

Example 26:

Decorative nonwoven fabric sheet/ZA31/Skin nonwoven fabric layer/Fusing nonwoven fabric layer/Core nonwoven fabric layer/Fusing nonwoven fabric layer/Skin nonwoven fabric layer
In Example 26, the core nonwoven fabric layer was prepared in the same manner as in Examples 17-25. The skin nonwoven fabric layer was prepared by blending 60% by weight of 6-denier polyester fibers with 40% by weight of 4-denier low-melting polyester fibers, and opening, carding and needle punching.

Example 27:

Skin nonwoven fabric layer/ZA31/Core nonwoven fabric layer/Fusing nonwoven fabric layer/Skin nonwoven fabric layer

Example 28:

Skin nonwoven fabric layer/ZA31/Core nonwoven fabric layer/Skin nonwoven fabric layer
In Exampls 27 and 28, the core nonwoven fabric layer was prepared in the same manner as in Examples 17-25. The skin nonwoven fabric layer was prepared by blending 60% by weight of 6-denier polyester fibers with 20% by weight of 2-denier low-melting polyester fibers and 20% by weight of 3-denier low-melting polyester fibers, and opening, carding and needle punching.

Example 29:

Skin nonwoven fabric layer/ZA31/Core nonwoven fabric layer

Example 30:

Decorative nonwoven fabric sheet/ZA31/Skin nonwoven fabric layer/Fusing nonwoven fabric layer/Core nonwoven fabric layer
In Examples 29 and 30, the skin nonwoven fabric layer was prepared in the same manner as in Examples 17-25. The core nonwoven fabric layer was prepared by blending 30% by weight of 15-denier polyester fibers and 30% by weight of 6-denier polyester fibers with 40% by weight of 4-denier low-melting polyester fibers, and opening, carding and needle punching.

Example 31:

Skin nonwoven fabric layer/Core nonwoven fabric layer/Skin nonwoven fabric layer

Example 32:

Skin nonwoven fabric layer/Fusing nonwoven fabric layer/Core nonwoven fabric layer/Fusing nonwoven fabric layer/Skin nonwoven fabric layer

In Examples 31 and 32, the core nonwoven fabric layer was prepared in the same manner as in Examples 17-25. The skin nonwoven fabric layer was prepared by blending 60% by weight of 6-denier polyester fibers with 40% by weight of 4-denier low-melting polyester fibers, and opening, carding and needle punching.

Table 13

| Laminate form | Basis weight, g/m$^2$ | FS, kgf/cm$^2$ | Thickness, mm |
|---|---|---|---|
| E26 | 960 | 23.6 | 5.3 |
| E27 | 845 | 28.2 | 4.6 |
| E28 | 795 | 32.5 | 4.3 |
| E29 | 800 | 1.1 | 15.6 |
| E30 | 1030 | 0.9 | 17.0 |
| E31 | 735 | 18.5 | 4.3 |
| E32 | 835 | 34.9 | 4.3 |

Although some preferred embodiments have been described, many modifications and variations may be made thereto in the light of the above teachings. It is therefore to be understood that within the scope of the appended claims, the invention may be practiced otherwise than as specifically described.

**Claims**

1. A fibrous laminate form comprising
   a core layer of organic fiber nonwoven fabric having opposed major surfaces and one or both of

   (i) a skin layer of organic fiber nonwoven fabric and
   (ii) an organic resin film on at least one major surface of said core layer and having a different density from said core layer.

2. The fibrous laminate form of claim 1 comprising said skin layer, wherein the organic fiber nonwoven fabrics of said core layer and said skin layer comprise a major proportion of short fibers having a fineness of 1 to 60 deniers and at least 10% by weight of low-melting fibers as a binder.

3. The fibrous laminate form of claim 2 wherein said skin layer of nonwoven fabric has a multilayer structure including a surface layer containing 10 to 60% by weight of low-melting fibers and a fusing layer containing 60 to 100% by weight of low-melting fibers, said fusing layer being disposed close to said core layer.

4. The laminate form of claim 1 comprising an organic resin film wherein the organic fiber nonwoven fabric of said core layer comprises a major proportion of short fibers having a fineness of 1 to 60 deniers and at least 10% by weight of low-melting fibers as a binder.

5. The laminate form of claim 4 wherein said core layer has a density of at least 0.01 g/cm$^3$ and said organic resin film has a thickness of at least 0.01 mm.

6. A laminate form according to claim 1 comprising

   a core layer of organic fiber nonwoven fabric having opposed major surfaces,
   an organic resin film on one major surface of said core layer, and
   a skin layer of organic fiber nonwoven fabric on said organic resin and having a higher density than said core layer.

7. The laminate form of claim 6 wherein an organic resin film is laminated on the other major surface of said core layer.

8. The laminate form of claim 7 wherein a skin layer of organic fiber nonwoven fabric having a higher density than said core layer is laminated on the other major surface laminated-organic resin film.

9. A laminate form according to claim 1 comprising

   a core layer of organic fiber nonwoven fabric having opposed major surfaces,
   an organic resin film on one major surface of said core layer, and
   a skin layer of organic fiber nonwoven fabric on the other major surface of said core layer and having a higher density than said core layer.

10. The laminate form of claim 9 wherein a skin layer of organic fiber nonwoven fabric having a higher density than said core layer is laminated on said organic resin film.

11. A laminate form according to claim 1 comprising

   a core layer of organic fiber nonwoven fabric having opposed major surfaces,
   a skin layer of organic fiber nonwoven fabric on one major surface of said core layer and having a higher density than said core layer, and
   an organic resin film on said skin layer.

12. The laminate form of claim 11 wherein a decorative sheet is laminated on said organic resin layer.

13. The laminate form of claim 11 or 12 wherein an organic resin film is laminated on the major surface of said core layer.

14. The laminate form of claim 13 wherein a skin layer of organic fiber nonwoven fabric having a higher density than said core layer is laminated on the major surface laminated-organic resin film.

15. The laminate form of claim 11 or 12 wherein a skin layer of organic fiber nonwoven fabric having a higher density than said core layer is laminated on the other surface of said core layer.

16. The laminate form of claim 6, 9 or 11 wherein the organic fiber nonwoven fabrics of said core layer and said skin layer comprise a major proportion of short fibers having a fineness of 1 to 60 deniers and at least 10% by weight of low-melting fibers as a binder.

17. The laminate form of claim 16 wherein said skin layer of nonwoven fabric has a multilayer structure including a surface layer containing 10 to 60% by weight of low-melting fibers and a fusing layer containing 60 to 100% by weight of low-melting fibers, said fusing layer being disposed close to said core layer.

18. The laminate form of any preceding claim wherein said core layer has a density of at least 0.01 g/cm$^3$ and said skin layer has a higher density of at least 0.1 g/cm$^3$.

19. The laminate form of any preceding claim wherein said core layer and said skin layer are stacked such that the fiber orientation of said core layer is parallel to the fiber orientation of said skin layer.

20. The laminate form of any one of claims 1 to 19 wherein said core layer and said skin layer are stacked such that the fiber orientation of said core layer is at an angle to the fiber orientation of said skin layer.

# FIG.1

# FIG.2

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

# FIG.17

# FIG.18

# FIG.19
## (PRIOR ART)

# FIG.20